# EUROPÄISCHE PATENTSCHRIFT

(11) **EP 0 808 430 B1**
(45) Veröffentlichungstag und Bekanntmachung des Hinweises auf die Patenterteilung: **31.10.2001**
(21) Anmeldenummer: 96904079.9
(22) Anmeldetag: 14.02.1996
(51) Int. Cl.: F16D 55/00

(54) **LEICHTBAU-SCHEIBENBREMSE**
LIGHTWEIGHT DISC BRAKE
FREIN A DISQUE DE REALISATION LEGERE

(30) Priorität: 15.02.1995 DE 19505013
(43) Veröffentlichungstag der Anmeldung: 26.11.1997
(73) Patentinhaber: Continental Teves AG & Co. oHG, 60488 Frankfurt (DE)
(72) Erfinder: LEIDECKER, Hans-Dieter, D-65931 Frankfurt am Main (DE); WEILER, Rolf, D-65817 Eppstein (DE)
(86) Internationale Anmeldenummer: EP9600618
(87) Internationale Veröffentlichungsnummer: WO9625608

(56) Entgegenhaltungen:
- WO-A-92/08908
- DE-A- 1 480 028
- DE-A- 3 022 262
- DE-A- 3 803 957
- DE-A- 3 833 553
- DE-C- 2 901 243

## Beschreibung

Die Erfindung betrifft eine Scheibenbremse mit einem Gehäuse aus Leichtmetall gemäß dem Oberbegriff des Patentanspruchs 1.

Eine derartige Scheibenbremse ist aus der DE-A-38 03 957 bekannt. Die bekannte Scheibenbremse besitzt ein Gehäuse aus Aluminiumguß, das sich durch ein geringes Gewicht auszeichnet. Dies ist insbesondere im Hinblick auf die Reduzierung der ungefederten Massen am Fahrzeugrad vorteilhaft. In diesem Zusammenhang geht die WO 92/17712 noch weiter. Dort wird eine Schwimmsattel-Teilbelagscheibenbremse mit einem gegossenen Gehäuse aus Leichtmetall beschrieben, deren Gehäuse mittels Verstärkungselementen aus einem hochfesten Werkstoff im die Bremsscheibe übergreifenden Brückenabschnitt verstärkt ist. Ein Nachteil derartiger Bremsen mit Leichtmetall-Gehäuse besteht darin, daß an den Abstützstellen für die Bremsbeläge Korrosion und eine verstärkte Abnutzung auftritt. Ursache dafür ist das Material der Bremsbelag-Rückenplatten, die fast ausschließlich aus Eisen bestehen. Aus diesem Grund sind bei der aus der DE-A-38 03 957 bekannten Scheibenbremse Profilschienen vorgesehen, an denen die Bremsbelag-Rückenplatten abgestützt sind. Die Profilschienen sind am Gehäuse durch Schrauben befestigt. Diese Befestigung erlaubt den Ausgleich von Fertigungstoleranzen, indem die Profilschienen innerhalb eines vorgegebenen Spiels justiert und anschließend in der optimalen Lage durch die Schrauben fixiert werden können. Das Problem der Bremsbelag-Abstützung im Leichtmetall-Gehäuse ist dabei hinsichtlich der technischen Funktion zufriedenstellend gelöst.

Allerdings ist die Lösung sehr kostenaufwendig, da kompliziert ausgeformte Profilschienen zur Verwendung kommen und die Befestigung durch Schrauben mit Toleranzausgleich ebenfalls zur Erhöhung der Fertigungskosten beiträgt.

Aus der GB-A-2 132 713 ist weiterhin eine Scheibenbremse mit einem gegossenen Leichtmetall-Gehäuse bekannt, in das Winkelschienen zur Abstützung der Bremsbeläge eingegossen sind. Dabei sind jeweils zwei Winkelschienen, die auf unterschiedlichen Seiten der Bremsscheibe im Gehäuse angeordnet sind, mittels Brückenabschnitten zu einem einzigen Einlegeteil verbunden. Zur sicheren Funktion einer solchen Bremse müssen die die einzelnen Winkelschienen verbindenden Brückenabschnitte nach dem Gießen des Gehäuses wieder entfernt werden. Dies geschieht durch einen zusätzlichen mechanischen Bearbeitungsschritt, der unnötigen Fertigungsaufwand erfordert.

Aufgabe der Erfindung ist es, eine Scheibenbremse mit einem Gehäuse aus Leichtmetall zu verbessern, so daß insbesondere hinsichtlich der Abstützung der Bremsbeläge eine einfache und kostengünstig herstellbare Anordnung entsteht.

Die Lösung der Aufgabe ergibt sich aus dem kennzeichnenden Teil des Patentanspruchs 1. Im Prinzip besteht die Lösung darin, die für die Abstützung der Bremsbeläge vorgesehenen gehäusefesten Stützen aus einem hochfesten Material bereits beim Gießen des Leichtmetall-Gehäuses mit einzugießen und die bei der Fertigung auftretenden Toleranzen in einem Nachbearbeitungsgang auszugleichen, bei dem die Abstützflächen für die Bremsbeläge in die Stützen eingeformt werden. Bei der erfindungsgemäßen Scheibenbremse wird der auch beim Stand der Technik nach der DE 38 03 957 A1 erforderliche Bearbeitungsgang für die Abstützflächen auf den Zeitpunkt nach dem Befestigen der Stützen im Gehäuse verschoben. Dadurch wiederum wird es möglich, die Stützen in das Gehäuse einzugießen und die dabei auftretenden Fertigungstoleranzen zunächst hinzunehmen und beim Nachbearbeitungsgang auszugleichen. Auch der beim Stand der Technik erforderliche Aufwand zur Justierung der Stützen entfällt bei der erfindungsgemäßen Scheibenbremse. Die Scheibenbremse nach Anspruch 1 betrifft somit eine vorteilhafte Anordnung der Abstützflächen zueinander und in Bezug auf die Bremszylinderbohrung im Zusammenhang mit der oben genannten Gehäuseform für eine besonders einfache und kostengünstige Nachbearbeitung des Gehäuses.

Besonders vorteilhaft kann die Erfindung angewandt werden bei einer aus der DE 40 36 063 A1 bekannten Scheibenbremse. Diese bekannte Scheibenbremse hat ein Gehäuse aus einem Eisenwerkstoff, in dem Stützen für die Bremsbeläge ausgeformt sind. Die Abstützflächen der Stützen werden nach dem Gießen des Gehäuses in vorteilhafter Weise gleichzeitig in einem Arbeitsgang zusammen mit der Fertigung der Bremszylinderbohrung bearbeitet.

Die Ansprüche 2 bis 4 betreffen die Verwendung vorteilhafter Materialien für das Gehäuse bzw. die Stützen.

In einer einfachen und besonders kostengünstig zu beschaffenden Ausführungsform bestehen die Stützen gemäß Anspruch 5 aus Bolzen oder gemäß Anspruch 6 aus noch weiter gewichtsoptimierten Rohrstücken.

In einer Weiterbildung der Erfindung sind die Stützen selbst wieder durch Materialanhäufungen des Gehäuses an den in Umfangsrichtung außen liegenden Seiten abgestützt. Bei dieser Ausführungsform können die Stützen selbst schwächer ausgestaltet werden, wodurch sich die Materialkosten und das Gewicht weiter verringert. Entscheidend für die Erfindung ist lediglich die Tatsache, daß die Abstützflächen für die Bremsbeläge aus einem relativ abriebfesten und korrosionsbeständigen Material bestehen.

In den Ansprüchen 7 und 8 werden Maßnahmen zur formschlüssigen und verdrehsicheren Verankerung der Stützen im Bremsgehäuse vorgeschlagen.

Ein Ausführungsbeispiel der Erfindung wird nachfolgend anhand der Zeichnungen näher erläutert.

Es zeigen:
- Figur 1: eine Seitenansicht eines Gehäuserohteils für eine erfindungsgemäße Scheibenbremse,
- Figur 2: eine teilweise geschnittene Draufsicht auf dasselbe Rohteil gemäß Linie A-A von Figur 1.

In den Zeichnungen ist ein Gehäuseteil 1 aus Aluminiumguß dargestellt. Es handelt sich um ein Rohteil in dem Zustand, in dem es gegossen worden ist. In das Gehäuseteil 1 sind zwei gehäusefeste Stützen 2,3 aus Edelstahl eingegossen, an denen ein Bremsbelag 4 abstützbar ist. In einer Weiterbildung der Erfindung bestehen die Stützen 2,3 aus Titan. Im Vergleich zu Stützen aus Edelstahl wirkt sich diese Maßnahme vorteilhaft beim Eloxieren des Aluminiumgehäuses aus.

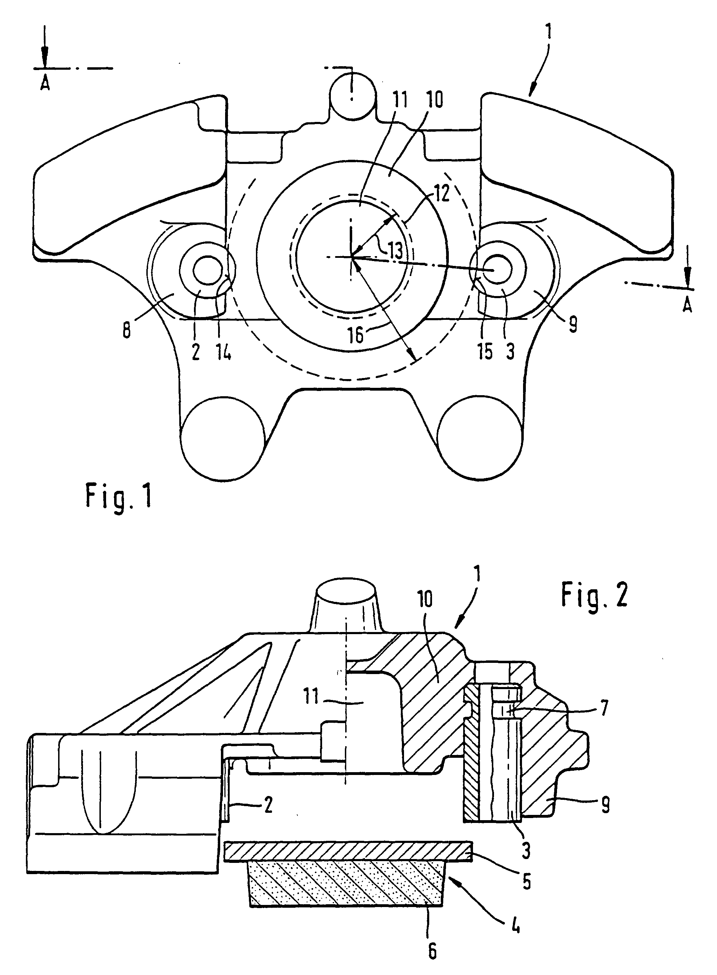

Wie man in Figur 2 erkennt, ist der aus einer Rückenplatte 5 und einem Reibbelag 6 bestehende Bremsbelag 4 im nichteingebauten Zustand dargestellt, da der Einbau vor der Nachbearbeitung des Gehäuseteils 1 noch nicht möglich ist.

Die Stützen 2,3 sind als Rohrstücke ausgebildet und besitzen jeweils eine Ringnut 7 zur Verankerung im Material des Gehäuseteils 1. Auf den in Umfangsrichtung außen liegenden Seiten des Gehäuseteils 1 sind die Stützen 2,3 selbst wieder durch Materialanhäufungen 8,9 abgestützt, um eine höhere Tragfähigkeit für die beim Bremsen an den Bremsbelägen 4 auftretenden Umfangskräfte zu erzielen. Im Gehäuserohteil befindet sich noch ein Bremszylinder 10 mit einem Hohlraum 11, der für den später einzusetzenden, hier nicht gezeigten Bremskolben bestimmt ist.

In einem Nachbearbeitungsgang wird im Hohlraum 11 des Bremszylinders 10 eine in Figur 1 durch Strichelung angedeutete Bremszylinderbohrung 12 eingebracht. Das dafür verwendete Bohrwerkzeug ist gestuft ausgebildet, so daß neben der Bremszylinderbohrung 12 mit dem Radius 13 zwei Abstützflächen 14,15 der Stützen 2,3 mit dem Radius 16 bearbeitet werden können. Die Abstützflächen 14,15 der Stützen 2,3 haben also die Form von Zylindersegmenten, die koaxial zur Bremszylinderbohrung 12 des Gehäuses 1 angeordnet sind.

## Patentansprüche

1. Scheibenbremse mit einem Gehäuse (1) aus Leichtmetall, mit Bremsbelägen (4) und mit gehäusefesten, in das Gehäuse (1) eingegossenen Stützen (2,3) aus einem hochfesten Material, die Abstützflächen (14,15) aufweisen, wobei die Bremsbeläge (4) an den Abstützflächen (14, 15) in Umfangsrichtung abgestützt und in axialer Richtung verschiebbar geführt sind, **dadurch gekennzeichnet, daß** die Abstützflächen (14, 15) durch einen Nachbearbeitungsgang nach dem Befestigen der Stützen (2,3) im Gehäuse (1) eingeformt sind und, daß die Abstützflächen (14,15) in Form von Zylindersegmenten ausgebildet und koaxial zu einer Bremszylinderbohrung (12) des Gehäuses (1) angeordnet sind.

2. Scheibenbremse nach Anspruch 1, **dadurch gekennzeichnet, daß** das Gehäuse (1) aus Aluminium oder einer Aluminiumlegierung besteht.

3. Scheibenbremse nach Anspruch 1 oder 2, **dadurch gekennzeichnet, daß** die Stützen (2,3) aus Edelstahl bestehen.

4. Scheibenbremse nach Anspruch 1 oder 2, **dadurch gekennzeichnet, daß** die Stützen (2,3) aus Titan bestehen.

5. Scheibenbremse nach einem der Ansprüche 1 bis 4, **dadurch gekennzeichnet, daß** die Stützen (2,3) als Bolzen ausgebildet sind.

6. Scheibenbremse nach einem der Ansprüche 1 bis 4, **dadurch gekennzeichnet, daß** die Stützen (2,3) als Rohrstücke ausgebildet sind.

7. Scheibenbremse nach Anspruch 5, **dadurch gekennzeichnet, daß** die Bolzen zur formschlüssigen Verankerung im Gehäuse (1) zumindest eine seitliche Fläche besitzen, durch die eine Drehung um die Bolzenachse verhindert wird.

8. Scheibenbremse nach Anspruch 7, **dadurch gekennzeichnet, daß** die Bolzen in ihrem im Gehäuse eingegossenen Bereich einen sechseckigen Querschnitt aufweisen.

## Claims

1. Disc brake with a housing (1) made of light metal, with brake linings (4) and supports (2, 3) made up of a high-strength material and cast into the housing (1), the said supports having supporting surfaces (14, 15), and the brake linings (4) being supported on the supporting surfaces (14, 15) in a circumferential direction and being slidably guided thereon in an axial direction,
**characterized in that** the supporting surfaces (14, 15) are shaped in a finishing operation after the securement of the supports (2, 3) in the housing (1), and **in that** the supporting surfaces (14, 15) are configured as cylinder segments and arranged coaxially relative to a brake cylinder bore (12) of the housing (1).

2. Disc brake as claimed in claim 1,
**characterized in that** the housing (1) is made of aluminum or an aluminum alloy.

3. Disc brake as claimed in claim 1 or claim 2,
**characterized in that** the supports (2, 3) are made of stainless steel.

4. Disc brake as claimed in claim 1 or claim 2,
**characterized in that** the supports (2, 3) are made of titanium.

5. Disc brake as claimed in any one of claims 1 to 4,
**characterized in that** the supports (2, 3) are designed as pins.

6. Disc brake as claimed in any one of claims 1 to 4,
**characterized in that** the supports (2, 3) are designed as tubular elements.

7. Disc brake as claimed in claim 5,
**characterized in that** for form-locking fixture in the housing (1), the pins have at least one lateral surface by which rotation about the pin axis is prevented.

8. Disc brake as claimed in claim 7,
**characterized in that** the pins have a hexagonal cross-section in their area cast into the housing.

## Revendications

1. Frein à disque comprenant un boîtier (1) en métal léger, des garnitures de frein (4) et des supports (2, 3) en une matière à résistance mécanique élevée qui sont fixes par rapport au boîtier, sont mis en place à la coulée dans le boîtier (1) et comportent des surfaces d'appui (14, 15), les garnitures de frein (4) étant guidées d'une manière coulissante suivant la direction axiale et prenant appui suivant la direction circonférentielle sur les surfaces d'appui (14, 15), **caractérisé en ce que** les surfaces d'appui (14, 15) sont formées au moyen d'une opération d'usinage ultérieur après la fixation des supports (2, 3) dans le boîtier (1) et **en ce que** les surfaces d'appui (14, 15) sont réalisées sous forme de segments cylindriques et sont disposées coaxialement à un alésage de cylindre de frein (12) du boîtier (1).

2. Frein à disque suivant la revendication 1, **caractérisé en ce que** le boîtier (1) est en aluminium ou un alliage d'aluminium.

3. Frein à disque suivant la revendication 1 ou 2, **caractérisé en ce que** les supports (2, 3) sont en acier spécial.

4. Frein à disque suivant la revendication 1 ou 2, **caractérisé en ce que** les supports (2, 3) sont en titane.

5. Frein à disque suivant l'une des revendications 1 à 4, **caractérisé en ce que** les supports (2, 3) sont réalisés sous forme de tronçons de tige.

6. Frein à disque suivant l'une des revendications 1 à 4, **caractérisé en ce que** les supports (2, 3) sont réalisés sous forme de tronçons de tube.

7. Frein à disque suivant la revendication 5, **caractérisé en ce que**, pour l'ancrage par complémentarité de formes dans le boîtier (1), les tronçons de tige comportent au moins une surface latérale au moyen de laquelle une rotation autour de l'axe de tronçon de tige est empêchée.

8. Frein à disque suivant la revendication 7, **caractérisé en ce que** les tronçons de tige ont une section transversale à six-pans dans leur zone mise en place à la coulée dans le boîtier.
